# EUROPEAN PATENT SPECIFICATION

(11) **EP 1 826 301 B1**
(45) Date of publication and mention of the grant of the patent: **08.10.2008**
(21) Application number: 06425125.9
(22) Date of filing: 28.02.2006
(51) Int. Cl.: D03C 1/00, F16D 11/06, F16D 11/16

(54) **Improved conical coupling of the connecting rod in a rotary dobby for weaving looms**
Verbesserte Kegelkupplung der Verbindungstage in einer Rotationschaftmaschine für Webmaschinen
Couplage conique amélioré de la tige de connection dans une ratière rotative pour des métiers à tisser

(43) Date of publication of application: 29.08.2007
(73) Proprietor: F.I.R.S.T. S.p.A., 24028 Ponte Nossa (BG) (IT)
(72) Inventor: Calzaferri, Stefano, 24023 Clusone (Bergamo) (IT); Tasca, Egidio, 24040 Stezzano (Bergamo) (IT)
(74) Representative: Faggioni, Marco

(56) References cited:
- EP-A- 0 080 547
- EP-A- 0 525 862
- US-A- 4 362 188
- US-A- 4 367 770
- US-A- 4 493 346
- US-A- 4 597 417
- US-A- 4 763 697

## Description

The present invention refers to an improved conical coupling, to be employed in a rotary dobby for weaving looms. In particular, the present invention addresses a slider of this type, capable of an optimal coupling/uncoupling performance at high frequencies, so as to be able to be successfully used in latest-generation, high-speed weaving looms.

The general structure of a slider of the type of the present invention is disclosed in EP-B-234.321. In short, and with reference to the accompanying fig. 1, in rotary dobbies using this type of slider the alternate lifting/lowering of the heald frames is controlled by respective connecting rods B, mounted on a dobby drive shaft S through an eccentric E. More precisely, eccentric E is interposed between a driving ring A, integral and concentric with shaft S, and the big end of connecting rod B.

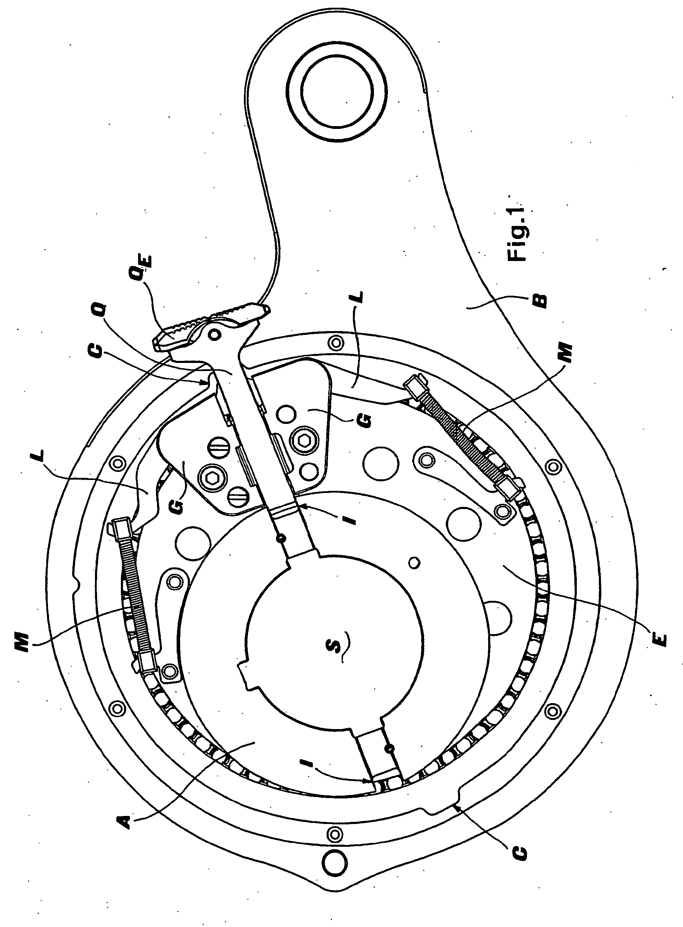

Eccentric E can be made integral in rotation, alternatively and upon command, with connecting rod B or with ring A, precisely by shifting a key slider Q, slidable in a radial direction with respect to shaft S along guiding means G which are integral with eccentric E. As a matter of fact, mechanic control means are capable of radially shifting slider Q into an external position, uncoupling said slider from ring A, in contrast to the action of return spring means of slider Q into an internal position (shown in fig. 1) of coupling into matching seats I formed in diametrically opposite positions on ring A. Electromagnetic means (not shown) act on the external end Q_{E} of slider Q in order to maintain the same in the external position into which it is shifted by said mechanic control means, for a set length of time.

In order to avoid any undesired rotation of eccentric E-due to vibrations or friction pulling by ring A - during this period of time, two opposite levers L are hinged on guiding means G, one end of which levers is constantly kept in traction by a respective spring M anchored in a suitable position on eccentric E. The free ends of the two levers L are positioned below slider Q (and for this reason they are only partly visible in fig. 1) and mutually meshed so as to altogether make up a movable stop capable of elastically engage one of two opposite recesses C - provided within the rod big end in correspondence of the two possible disengagement positions of slider Q - when the slider itself is brought into its external position by said control means.

When key slider Q lies in its external position, i.e. disengaged from ring A, rotation of shaft S does not determine any movement of connecting rod B - which, as a matter of fact, is steadily maintained in a precisely determined position by the action of levers L engaged in one of the two recesses C - and the corresponding heald frame hence does not undergo any shift. On the contrary, when slider Q lies in its internal position of engagement with ring A, rotation of shaft S determines the simultaneous rotation of eccentric E, and hence a linear, alternate shift of the small end of connecting rod B with respect to the axis of shaft S. This shift determines, by means of suitable leverages, the lifting (in the first 180° of rotation) and the lowering (in the second 180° of rotation) of the heald frame connected with said connecting rod.

The coupling of key slider Q with ring A can occur only when one of the two opposite seats I provided on ring A lies in correspondence of the coupling end Q_{I} of slider Q. As a matter of fact, if at that point the electromagnetic means maintaining the slider in its external position are deactivated, the slider is recalled by the spring means coupling with a corresponding seat I of ring A.

Thanks to this system it is possible to obtain any predetermined sequence of movements of the heald frames. As a matter of fact, each frame lifts and lowers, in an alternately continuous and regular manner, as long as slider Q of the respective dobby connecting rod is permanently engaged with one of the seats I provided on ring A, while the heald frame remains stationary, in the lifted or in the lowered position, whenever slider Q is disengaged from ring A in opposition to the above-mentioned spring means, while it lies in correspondence of either one of the two opposite recesses C formed in the rod big end. It is hence possible to thereby obtain any desired fabric pattern.

In known type dobbies, the slider/ring coupling is a conical coupling or a key coupling.

Conical couplings of the prior art have quite a sharply inclined walls for providing a wider circumferential clearance, and consequently an increased ease of engagement, and avoiding any problem of jamming of the coupling in the engaged position due to a "wedge effect"; however engagement is not sufficiently gradual and a high axial thrust, in disengagement direction, is unfavourably applied to the slider during rotation of the rotary dobby shaft. Examples of this kind of coupling are disclosed in US-4.763.697, E-525.862, US-4.362.188, US-4.367.770, US-4.493.346, US-4.597.417.Key coupling are planar and parallel, hence only have an allowance sufficient for the mutual sliding of the components. Such couplings therefore provide quite a higher precision in respect of the known conical couplings, but require an optimal and stable mutual positioning of the components in order to be actuated. With increasing loom speeds and with the presence of vibrations, it is therefore not infrequent for known devices to randomly display missed couplings of slider Q which, rather than engaging with the desired seat I of ring A, hits on the edge of said seat without engaging therewith and, during the subsequent half-rotation of shaft S, rubs rubs on the external surface of ring A until it meets the diametrically opposite seat I. The consequences of this drawback are both of a textile nature, causing the missed reproduction of the desired weaving pattern, and of a mechanical nature, because false couplings, the resulting slider impacts, and the rubbing thereof on the external wall of ring A determine early and undesired device wear.

Attempts at removing this drawback, by forming bevels, both on the coupling end Q_{I} of slider Q and on the mouth of the respective seat I, have only given very limited improvements. It is hence currently possible to employ a rotary dobby of the type shown above only in weaving looms intended to operate at speeds not above 600 picks/minute, because otherwise error frequency would become unacceptably high.

Although rotary dobbies based on a different operating principle are available on the market today, said dobby being capable of operating without problems at weaving speeds above 600 picks/minute, the dobbies having the structure indicated above are still much in demand, due to their simplicity and sturdiness, and there is consequently an unmet market demand for a rotary dobby of the radial-slider type which may be employed also in faster looms than those on which such dobby can currently be installed.

It is hence an object of the present invention to supply a coupling slider for rotary dobbies suitable for regular operation, i.e. not displaying missed couplings, even at loom speeds above those currently possible with this type of dobbies.

According to the present invention, such object is achieved by means of a conical coupling for a rotary dobby, for coupling/uncoupling a connecting rod with a drive shaft of said rotary dobby, said coupling comprising a slider and respective seats formed in said shaft or in a drive ring integral therewith characterized in that said slider comprises at least one integral mechanical stop apt to determine the end stop of the slider during the coupling step in one of said seats, before full contact of the conical coupling takes place.

Further features and advantages of the present invention will in any case be more evident from the following detailed description of a preferred embodiment of the invention, shown with reference to the accompanying drawings, wherein:
fig. 1 is a side elevation view of one of the connecting rods of a known-type rotary dobby for weaving looms;
fig. 2 is an enlarged-scale view of the slider of the present invention in a disengaged position, during the rotation of the drive shaft of the dobby;
fig. 3 is a view similar to fig. 2, with the slider in a disengaged position aligned with one of the coupling seats provided on the ring integral with the dobby drive shaft;
fig. 3A is an enlarged view (approximately 10:1 ratio) of the detail of the planar-conical coupling enclosed in the circle of fig. 3;

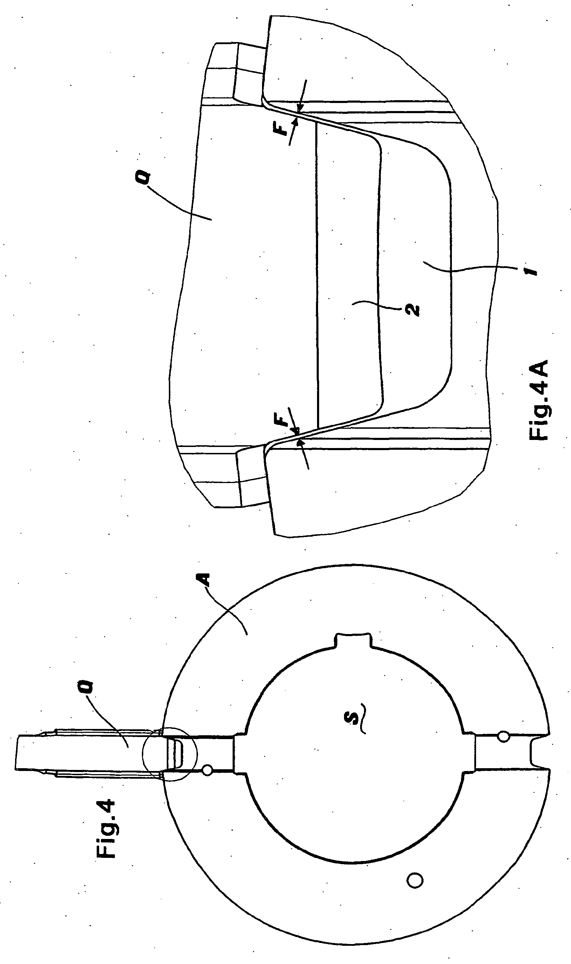

figs. 4 and 4A are views similar to figs. 3 and 3A, respectively, showing the planar-conical coupling in an engagement position.

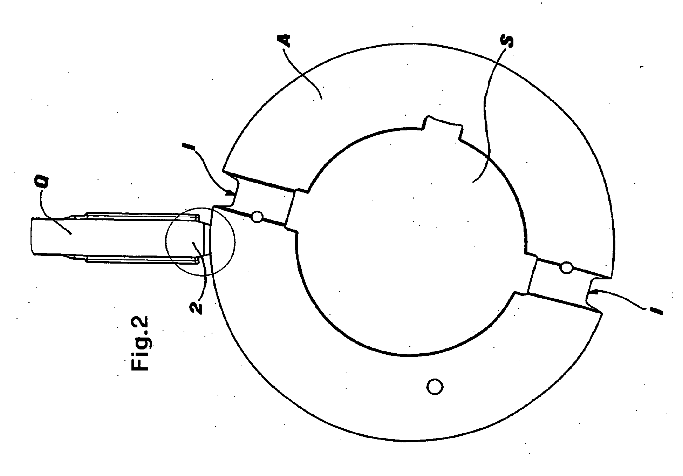

The general structure of the control device of a connecting rod of a rotary dobby, wherein a key slider Q is used, has already been described in the introductory part of the present description, with reference to fig. 1. Fig. 2 shows the detail of shaft S and of the respective driving ring A, in an enlarged scale, whereon two opposite seats I are formed for engagement with the coupling end Q_{I} of slider Q, for the objects described above. Fig. 2 shows the position wherein slider Q is disengaged from ring A. In this position shaft S and driving ring A rotate without causing any shifting of connecting rod B and hence of the heald frame connected thereto.

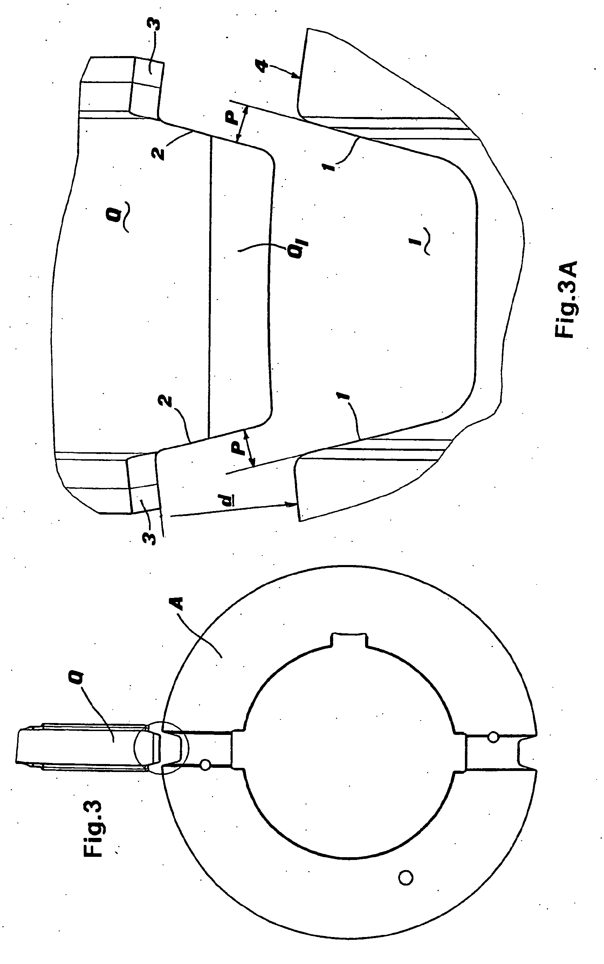

Every 180° of rotation, one of the two seats I formed on ring A lies exactly in correspondence of slider Q, as shown in fig. 3, and it is in this position that the coupling between slider and ring can be controlled, deactivating the electromagnetic means which keep the slider in its external position, so that the slider is pushed into the coupling position by the return spring means described above.

As is better visible in the enlarged detail of fig. 3A, the seat I formed on ring A has converging, inclined side walls 1, respectively parallel to the corresponding side walls 2 of the coupling end Q_{I} of slider Q, so as to determine a planar coupling with two pairs of conical side walls ("planar-conical coupling" in the following) between the two elements when slider Q is introduced into seat I. Thanks to the use of this specific type of coupling, in the disengaged position shown in fig. 3A, walls 1 and 2 of the planar-conical coupling have a much larger circumferential clearance P than that of a conventional planar coupling, for example in the order of 1 millimetre. Such an increased clearance enormously reduces the risk of a missed coupling, allowing secure engagement of the coupling even at high speeds and in the presence of vibrations and/or relative micro-shifting between the two coupling elements.

As a matter of fact, the planar-conical coupling provides high standards of coupling ease, precision, safety and graduality, further allowing to act on the inclination of the side walls of the coupling, in a predetermined range, in order to change functionality of the coupling. As a matter of fact, couplings with less-sharply inclined walls (with respect to the axis of slider Q, which normally coincides with a radial direction of shaft S of the dobby) have improved features of graduality and safety, while couplings with more sharply inclined walls provide a wider circumferential clearance P and consequently an increased ease of engagement even in critical misalignment or vibration conditions.

In the use of planar-conical coupling of the present invention, however, it is necessary to bear in mind that, precisely due to the construction thereof, during the acceleration step a thrust is caused along the axial direction of slider Q due to the tangential forces acting on the inclined walls of the coupling. As a matter of fact, when slider Q is engaged with one of the respective seats I provided on ring A, it rotates together with shaft S and consequently simultaneously undergoes the centripetal axial force imparted by the respective retaining spring means and the axial component in the direction of expulsion of the slider - generated precisely due to coupling conicity - of the variable force resulting from the tangential acceleration of shaft S, which component is evidently the larger, the larger the inclination of the coupling walls with respect to the radial direction.

In current high-speed looms, the alternate accelerations of shaft A can be so high that the component of such forces which is released on the slider may end up overcoming the return force of the spring means and hence determine the temporary disengagement of slider Q and the consequent phase displacement of the heald frames with respect to the desired pattern. In order to overcome this drawback, it is of course possible to increase the retaining force of the spring means and/or to decrease the inclination of the walls of the engagement. Unfortunately, both these actions result in an increased risk of jamming of the coupling caused by a "wedge effect" between cooperating walls 1 and 2, of the coupling seat I on ring A, and of the coupling end Q_{I} of slider Q, respectively, which phenomenon would of course be extremely detrimental because it would prevent disengagement of slider Q at the desired time, thereby determining the continuous alternate movement of the corresponding heald frame and the consequent change of fabric pattern with respect to the programmed one.

Such possible drawback of small-inclination conical couplings - albeit extremely advantageous due to the gradual and safe coupling they allow - however, may be fully overcome using the slider according to a second embodiment of the invention. In such embodiment, slider Q, in addition to having coupling walls 2 inclined in the way already described above, further comprises two side stops 3, formed by side ribs of slider Q, which determine the maximum possible run d of slider Q during the engagement step, through the abutment thereof on the side wall 4 of ring A surrounding seats I. The position of the contact edge of stops 3 is finely machined so that, when the coupling is closed, i.e. stops 3 are in contact with walls 4, walls 1 and 2 of the planar-conical coupling instead are not in full contact, but still have a mutual circumferential allowance F sufficient to prevent the "wedge effect" and the consequent jamming of end Q_{I} of slider Q into seat I. Preferred values of allowance F lie for example in the range between 10 and 150 µm.

Thanks to this very simple expedient, any possible jamming problem of coupling end Q_{I} of slider Q into seat I is radically removed, making it possible to employ conical couplings even in the presence of very small angles of walls 1 and 2 of the coupling or of a strong force of the return spring of slider Q. The designer can hence freely vary these elements of the coupling, according to the specific features and performance which are to be obtained.

In particular, by using the slider having a planar-conical coupling according to the present invention, it is possible to remarkably improve coupling quality, even in the presence of remarkable loom speed and of vibrations, at the same time making reducing to almost negligible levels the risk of accidental disengagement of slider Q due to the centrifugal component of the acceleration forces of ring A, which component as a matter of fact acts in the direction of expulsion of the slider.

Experimental tests have shown that, by using the coupling slider according to the present invention, it is possible to increase the operating speed of the loom, without the problem of missed couplings, up to 100 picks/minute with respect to the threshold values previously possible with rotary dobbies equipped with sliders employing parallel planar couplings, while the inclination angle of walls 1 and 2 can be reduced, if necessary, up to 0,5° without any jamming problem of the coupling due to the wedge effect, thanks to the presence of stops 3.

Stops 3 and the respective abutment walls 4 are preferably treated, similarly to the other cooperating walls of the coupling, so as to have a great surface hardness, so as to guarantee a substantial absence of wear and hence a constant value of d over time, at least for the useful time expected for this type of devices.

The present invention has been described with reference to preferred embodiments of the same, but it is clear that variants and changes thereto may be provided in an obvious way by people skilled in the art, for example in connection with the shape and arrangement of the inclined walls of the couplings or with the number, shape and arrangement of stops 3. Such variants and changes hence all fall within the scope of the present invention as defined by the accompanying claims.

## Claims

1. A conical coupling for a rotary dobby, for coupling/uncoupling a connecting rod (B) with a drive shaft (S) of said rotary dobby for weaving looms, said coupling comprising a slider (Q) and respective seats (I) formed in said shaft or in a drive ring (A) integral therewith **characterized in that** said slider comprises at least one mechanical stop (3) apt to determine the end stop of the slider (Q) during the coupling step before full contact of the conical coupling takes place.

2. A conical coupling as claimed in claim 1), which is a planar coupling comprising at least a pair of conical side walls (1, 2).

3. A conical coupling as claimed in claim 1) or 2), wherein said stop (3) consists of at least one side rib of the slider (Q) capable of cooperating with a fixed abutment formed by the external wall (4) of said drive shaft (S) or of said driving ring (A) integral therewith, surrounding the coupling seat (I) of the slider (Q).

4. A conical coupling as claimed in claim 3), wherein said stops (3) are two and are arranged on two opposite sides of the slider (Q).

5. A conical coupling as claimed in any one of the previous claims, wherein the circumferential clearance (P) of the conical coupling in a disengaged position is in the order of 1 mm.

6. A conical coupling as claimed in any one of the previous claims, wherein the residual circumferential allowance (F) of the conical coupling, when said stops (3) are in contact with the respective abutments (4), lies between 10 and 150 µm.

7. A conical coupling as claimed in any one of the previous claims, wherein the angle of inclination of the conical walls of the coupling is equal to or above 0.5°.

8. A conical coupling as claimed in claim 2, wherein said planar coupling comprises at least two pairs of conicals side walls (1, 2).

## Patentansprüche

1. Konische Kupplung für eine Rotationsschaftmaschine zum Kuppeln/Entkuppeln einer Verbindungsstange (B) mit/von einer Antriebswelle (S) der besagten Schaftmaschine für Webstühle, wobei besagte Kupplung einen Schieber (Q) und jeweilige Sitze (I) umfasst, die in besagter Welle oder in einem Antriebsring (A) integral damit gebildet sind, **dadurch gekennzeichnet, dass** besagter Schieber mindestens einen mechanischen Anschlag (3) umfasst, der geeignet ist, den Endanschlag des Schiebers (Q) während des Kupplungsschritts zu bestimmen, bevor ein voller Kontakt der konischen Kupplung stattfindet.

2. Konische Kupplung nach Anspruch 1, die eine planare Kupplung ist, die mindestens ein Paar konische Seitenwände (1, 2) umfasst.

3. Konische Kupplung nach Anspruch 1 oder 2, wobei besagter Anschlag (3) aus mindestens einer Seitenrippe des Schiebers (Q) besteht, die fähig ist, mit einem fixierten Anschlag zusammenzuwirken, der durch die Außenwand (4) besagter Antriebswelle (S) oder den besagten Antriebsring (A) integral damit gebildet ist, die den Kupplungssitz (I) des Schiebers (Q) umgibt.

4. Konische Kupplung nach Anspruch 3, wobei besagte Anschläge (3) zwei sind und auf zwei entgegengesetzten Seiten des Schiebers (Q) angeordnet sind.

5. Konische Kupplung wie in einem der vorhergehenden Ansprüche beansprucht, wobei das Umfangsspiel (P) der konischen Kupplung in einer entkuppelten Position in der Größenordnung von 1 mm ist.

6. Konische Kupplung wie in einem vorhergehenden Anspruch beansprucht, wobei die restliche Umfangszugabe (F) der konischen Kupplung, wenn besagte Anschläge (3) mit ihren jeweiligen Anschlägen (4) in Kontakt sind, zwischen 10 und 150 µm liegt.

7. Konische Kupplung wie in einem der vorhergehenden Ansprüche beansprucht, wobei der Neigungswinkel der konischen Wände der Kupplung gleich oder mehr als 0,5° beträgt.

8. Konische Kupplung wie nach Anspruch 2 beansprucht, wobei die besagte planare Kupplung mindestens zwei Paare konischer Seitenwände (1, 2) umfasst.

## Revendications

1. Accouplement conique pour une ratière tournante, pour accoupler/désaccoupler une bielle (B) avec un arbre d'entraînement (S) de ladite ratière tournante pour des métiers à tisser, ledit accouplement comportant un coulisseau (Q) et des sièges respectifs (I) formés dans ledit arbre ou dans un anneau d'entraînement (A) qui en est solidaire, **caractérisé en ce que** ledit coulisseau comporte au moins une butée mécanique (3) apte à déterminer la fin de course du coulisseau (Q) pendant l'étape d'accouplement avant qu'un contact complet de l'accouplement conique ait lieu.

2. Accouplement conique selon la revendication 1, qui est un accouplement plan comportant au moins deux parois latérales coniques (1, 2).

3. Accouplement conique selon la revendication 1 ou 2, dans lequel ladite butée (3) est constituée d'au moins une nervure latérale du coulisseau (Q) pouvant coopérer avec une partie d'arrêt fixe formée par la paroi extérieure (4) dudit arbre d'entraînement (S) ou dudit anneau d'entraînement (A) qui en est solidaire, entourant le siège d'accouplement (I) du coulisseau (Q).

4. Accouplement conique selon la revendication 3, dans lequel lesdites butées (3) sont au nombre de deux et sont agencées sur deux côtés opposés du coulisseau (Q).

5. Accouplement conique selon l'une quelconque des revendications précédentes, dans lequel le jeu circonférentiel (P) de l'accouplement conique dans une position désengagée est de l'ordre de 1 mm.

6. Accouplement conique selon l'une quelconque des revendications précédentes, dans lequel la tolérance circonférentielle résiduelle (F) de l'accouplement conique, lorsque lesdites butées (3) sont en contact avec les parties d'arrêt respectives (4), est comprise entre 10 et 150 µm.

7. Accouplement conique selon l'une quelconque des revendications précédentes, dans lequel l'angle d'inclinaison des parois coniques de l'accouplement est égal ou supérieur à 0,5°.

8. Accouplement conique selon la revendication 2, dans lequel ledit accouplement plan comporte au moins deux paires de parois latérales coniques (1, 2).
